Europäisches Patentamt

(19) European Patent Office

Office européen des brevets

(11) Publication number: **0 008 929**
**A1**

# (12) EUROPEAN PATENT APPLICATION

(21) Application number: **79301780.7**

(22) Date of filing: **30.08.79**

(51) Int. Cl.³: **F 01 K 25/10**

(30) Priority: **05.09.78 GB 3560378**

(43) Date of publication of application:
**19.03.80 Bulletin 80/6**

(84) Designated Contracting States:
**DE FR IT NL SE**

(71) Applicant: **Rilett, John Walter**
**The Gables Hawkers Hill**
**Bibury Gloucestershire(GB)**

(72) Inventor: **Rilett, John Walter**
**The Gables Hawkers Hill**
**Bibury Gloucestershire(GB)**

(74) Representative: **Obee, Robert William**
**Hammersmith House**
**London W6 9DX(GB)**

(54) **Motors and gas supply apparatus therefor.**

(57) A gas-operated motor (123), notably for use in powering model aircraft, has $CO_2$ gas or the like working fluid fed to it from a capsule (101). The gas is superheated in use by the heat generated by the reversible adsorption, persorption or other physico-chemical association of a selected fluid - which may be the same as the working fluid - with a reactant (116). After use, the reactant can be regenerated by the application of heat and/or reduced pressure.

FIG.1.

0008929

## FIELD OF THE INVENTION

The present invention is concerned with gas-operated motors and gas-supply apparatus therefor. In particular the invention relates to motors for which the working fluid is a non-burning gas which is condensible at familiar climatic temperatures under the action of pressure alone, for example carbon dioxide, water vapour, halocarbons such as the FREONS (registered trademark) and the like. An aim of the present invention is to provide means to enable the use of such gas-operated motors at much higher power levels than has been practicable heretofore and, in particular, to provide means to achieve a substantially improved economy of gas usage for any given power level. The invention is described herein primarily in terms of its application to motors for powering model aircraft, although it is to be noted that the invention may be found equally useful in many other applications, e.g. in relation to motors for driving other toys and models, portable power tools, hedge trimmers, lawn mowers, chain saws and so on.

## BACKGROUND AND SUMMARY OF THE INVENTION

Model aircraft motors adapted to run on a supply of carbon dioxide, such as may be provided e.g. by a capsule of the type marketed under the registered trademark SPARKLETS, are already well known. Usual versions of such motors employ a simple tank as a reservoir to contain a mixture of gaseous and liquid carbon dioxide under pressure from which the gas boils off to supply the motor during operation. This process causes the tank and the gas/liquid mixture within it to become rapidly colder, with a consequent and undesirable rapid fall in the pressure of the gas in the tank causing falling motor power.

In order to overcome this problem it is proposed in my cognate United Kingdom patent applications Nos 1689/76 and 25600/76 to provide one or more container(s) holding or capable of being charged with buffer substance(s) in heat-conductive relationship with the reservoir and/or with a passage through which, in operation, the gas is supplied from the reservoir to the motor. For the purposes of the present specification the term 'buffer substance' means a substance which undergoes a change in its physical, chemical, crystallographic or other state at a temperature above the temperature of the gas or liquefied gas with which, in use, it is in heat-conductive relationship, the said change of state causing a release of heat to the gas or liquefied gas. The choice and effects of suitable buffer substances are discussed in the complete specification of the above-numbered cognate patent applications, the disclosure of which is incorporated herein by reference.

Motors which make use of this buffering technique can conveniently be referred to as "stored energy motors" because their buffer substances effectively store heat energy which is released to the working fluid for conversion into power as the motor runs. It is to this class of motor that the invention particularly relates, although as will appear hereinafter there may be instances where the invention is useful with a motor of the general kind indicated above but which is not equippped with a said buffer substance.

Prior to the present invention, gas-operated motors even of the stored energy type have been limited in power and economy because the temperature of the gas leaving the gas-supply apparatus (hereinafter, for convenience, referred to as a "power capsule") can be no higher than that of the buffer substance(s) in the power capsule. I have proposed that power capsules should employ a buffer substance which remelts by heat flow from its surroundings, which may in cold weather be typically at $5^{\circ}C$. Clearly the buffer substance should thus have a freezing point below $5^{\circ}C$ so that it may remelt automatically; but such a low freezing point limits the power-economy of motors to about 65 joules per gram of $CO_2$ in the case of a carbon dioxide working fluid which, though much higher than the circa 40J/gm obtained from motors with unbuffered tanks, is still inadequate for high-power motors where the weight and cost of $CO_2$ may become prohibitive.

To alleviate this problem I have proposed to employ a buffer of freezing point about $10^{\circ}C$ to increase power-economy to about 70J/gm. However this causes remelting problems in weather colder than about $12^{\circ}C$ which occurs quite often in many countries and, heretofore, has raised the prospect of having to match the buffer's freezing point to the country of use: the need for possibly three versions of power capsule - with buffering temperatures of perhaps $4^{\circ}C$, $9^{\circ}C$ and $14^{\circ}C$ - was foreseeable in order to achieve maximum power and economy in the country of destination of each power capsule.

The other alternative heretofore proposed was to use an electrical or other heater to melt a higher-freezing-point buffer immediately before operation. However, though such a solution to the problem may be attractive in some applications, it is unattractive for model aircraft because of the cost, complication and weight of the heater and because the user would have to carry some means to inject heat into the power capsule's buffer - for example a heavy electric accumulator or a vacuum flask of hot water. Such heat-recharging is also time-consuming and inconvenient in model flying fields and requires that the user must operate his motor within perhaps a minute after such recharging in order to avoid the risk of the buffer cooling down and freezing before use.

Another drawback of prior motors is as follows. It is recognised that superheating of the gas prior to its introduction to the working chamber(s) of the motor is of value not only in reducing the incidence of condensation of the gas when subsequently expanded in the motor but also in permitting, to advantage, a lower expansion ratio to be employed than would otherwise be possible. Hitherto, a large pressure drop (e.g. greater than 10% of the saturation vapour pressure, as disclosed in my cognate UK patent applications Nos 1689/76 and 25600/76) was the only simple means to superheat the gas, for which purpose the gas was lead through a relatively long, tortuous passage (or labyrinth), preferably in heat-conductive relationship with a said buffer substance. However, if this method is to be successful it is necessary to control the dimensions of the labyrinth passage cross-section to close tolerances in order to achieve the desired superheater pressure drop required for the particular motor, and to permit the matching of power capsules to motors of different power outputs and gas-consumption rates it is necessary to vary the length of the superheater labyrinth. A fixed length of such labyrinth can, in fact, be designed to suit motors of power outputs spanning a range of about 5:1 (say power outputs of from 2 to 10 watts with currently-known power capsules) - but no more. The present invention may permit this range to be increased to at least 10:1 with a fixed (and shorter) superheater length and with much easier production tolerances. In certain cases, a labyrinth as such may be dispensed with altogether.

From the foregoing it will be seen that in order to realise the full potential of gas-operated motors of this type, there is a need firstly to provide heat energy which is not necessarily linked to the ambient climatic temperature (because of the need to choose a buffer substance's freezing point so as to be just below that ambient temperature) and secondly there is a need to superheat the gas by a method other than a carefully-controlled labyrinth pressure-drop.

Accordingly, in a first aspect the invention resides in a gas-operated motor having associated therewith a vessel containing or capable of being charged with gas or a gas/liquefied gas mixture under pressure; a passage for the supply of gas from said vessel to the working chamber or chambers of the motor; at least one container in heat conductive relationship with, or capable of being brought into heat conductive relationship with, said passage or the working chamber(s) of the motor; said container containing or capable of being charged with a material (hereinafter referred to as a "heat source material") which has the ability to adsorb or persorb or associate exothermically with a selected fluid and to desorb or dissociate from that fluid under the effect of heat and/or reduced pressure; and means for the supply of the selected fluid to said container.

In a second aspect the invention resides in gas supply apparatus for association with a gas-operated motor and comprising a vessel containing or capable of being charged with gas or a gas/liquefied gas mixture under pressure a passage for the supply of gas from said vessel to the motor; at least one container in heat conductive relationship with, or capable of being brought into heat conductive relationship with, said passage; said container containing or capable of being charged with a heat source material (as defined above); and means for the supply of the selected fluid to said container.

In operation, the supply of the selected fluid to the heat source material leads to the generation of heat which is transferred to the gas being supplied along said passage to the motor, and/or to the gas actually within the working chamber(s) of the motor, to superheat or reheat the same. It is within the scope of the invention for the selected fluid to be one and the same as the gas which drives the motor (i.e. the working fluid) - in which case it is proposed to bleed off a portion of the gas flow from said passage for supply to the heat source material, and possibly re-unite such portion with the main gas flow to the motor after contact with the heat source material - or for the selected fluid to be entirely different, and stored separately from, the working fluid. Examples of suitable heat source materials and fluids for adsorption, persorption or association therewith are given hereinafter.

As previously indicated, the invention is particularly concerned with "stored energy motors". Preferably, therefore, there is also a container holding or capable of being charged with a buffer substance in heat conductive relationship with the gas reservoir vessel (tank), and/or with a portion of said passage. In some embodiments there may additionally or alternatively be a buffer substance provided in heat-conductive relationship with the working chamber(s) of the motor itself.

In general, the use of a buffered tank is to be preferred as this ensures the supply of gas at a sensibly constant pressure which not only allows the thermodynamic efficiency of the motor to be optimised but also helps to stabilise the torque and speed of the motor. Furthermore, the use of a buffer around the tank is a very cheap and simple way to provide the heat energy necessary to boil the working fluid: for example one gram of water provides 333 joules of latent heat whereas one gram of the much more expensive heat source materials described below may provide only 60 to 160 joules. Finally, a buffered tank has the overriding advantage of providing heat for boiling at exactly the time when it is needed whereas other physico-chemical techniques of providing heat for boiling will usually provide heat as soon as the tank is filled, requiring the motor to be started immediately. The buffer in a power capsule begins to work only when the motor is started.

Secondly, the present invention proposes that the power capsule buffering temperature should now be chosen typically in the range - $10^{\circ}$C to +$10^{\circ}$C for outdoor use regardless of climate, for instance in the case of model aircraft motors. Thus the use of water (freezing point $0^{\circ}$C) with its high latent heat, high heat conductivity and extreme cheapness may provide an ideal choice of buffer for all power capsules for model aircraft, whatever the country of use. Nevertheless, the present invention does allow the use of other buffering temperatures: for example a buffering temperature of +$12^{\circ}$C may prove to be more satisfactory for appliances used indoors.

Also, a buffer substance may be omitted altogether, for example in certain toy applications where the gas consumption is so low that a sufficient gas flow is provided by spontaneous evaporation of e.g. liquefied $CO_2$ and where the need for minimum production costs precludes the use of the steel tank which is generally required when buffering techniques are employed. In such cases, the use of a heat source material as indicated above can still be economically justifiable however, in relation to the improved motor performance which it brings.

## EXAMPLES OF HEAT SOURCE MATERIALS

Examples of materials suitable for use as the aforesaid heat source material in the present invention can be classified under three broad headings, as follows:

## 1.  Adsorption types

The crevices and pores in the surface (and sometimes in the body) of materials such as alumina, chips of porous pot, chalk, charcoal, silica gel and the like provide a relatively large surface area on which molecules of $CO_2$ or other selected fluids can be adsorbed.  Such adsorption is akin but not identical to condensation from gas phase to liquid phase and is accompanied by the evolution of heat akin to the heat of vapourisation of the adsorbed $CO_2$ or other fluid.  It is recommended that these materials should be used in the activated form, to provide higher heats of adsorption.  In the present invention the heat so evolved by the supply of the selected fluid to a container of an adsorptive material is transferred to the working fluid for the motor to superheat the same.  In time the adsorbent reaches a condition of equilibrium with the selected fluid at which stage no more fluid can be adsorbed.  By the application of heat and/or reduced pressure, however, the adsorbate can be desorbed thereby to regenerate the material and restore its adsorptive capacity. The process of adsorption and desorption can be repeated in this manner substantially indefinitely.

## 2.   Persorption types

The term "persorption" was coined by J W McBain (1930) to distinguish it from the ordinary (i.e. unactivated) and activated adsorption referred to above. In the second edition of "Textbook of Physical Chemistry" by Samuel Glasstone (Macmillan and Co. Ltd, 1966), page 1204, reference is made "to sorption of an entirely different character" followed by a description of "persorption" as follows:

"It is known from X-ray examination that the water molecules in zeolites are not held by ordinary valence bonds, but merely fit into the vacant spaces in the lattice of aluminium, silicon, oxygen and metal atoms.  On dehydration the water is removed and the spaces can be filled by other molecules; dehydrated zeolites are, therefore, good sorbing agents..."

Some of these persorbers have become known as molecular sieves because they permit only the entry of molecules smaller than the vacant spaces in the lattice originally occupied by the water molecules.

The present invention proposes the use of such persorbers firstly because they provide heats of persorption significantly greater (e.g. 70% more) than the heats of adsorption provided for instance by activated charcoal and silica gel, and secondly because such persorbers may be chosen for their selective persorption of the molecules of the working or other fluid.  Thus for example the zeolite known as chabazite, $CaAl_2Si_4O_{12}.6H_2O$ has lattice pores of approximately 3.5 Angstrom Units ("A") diameter which will admit the persorption only of molecules smaller than this size, for instance $H_2O$ and $NH_3$.  Therefore this persorber is particularly useful for superheating the gas supplied to a gas-operated motor using water vapour or ammonia as a working or heat source fluid:  it should be stressed that the present invention proposes the use of such materials to persorb only a relatively small proportion of the working fluid (e.g. 10-20%) so as to provide thermal energy to superheat the remainder of the working fluid, or to persorb a second (heat source) fluid so as to superheat the working fluid.

Other persorbers which may be used to advantage in the present invention include the following (which is not an exhaustive list):

**2.1  Crystalline potassium alumino-silicate**

Lattice pore size: About 3A.

Molecules persorbed: e.g. $H_2O$ and $NH_3$

Molecules excluded: those over 3A in diameter e.g. ethane

**2.2  Crystalline sodium alumino-silicate**

Chemical formula: $Na_{12} [(AlO_2)_{12}(SiO_2)]_{12} . 27H_2O$

Molecules persorbed: $H_2O$, $NH_3$, $H_2S$, $CO_2$, $SO_2$, $C_2H_4$, $C_2H_6$, $C_3H_6$ & $C_2H_5OH$.

Molecules excluded: those over 4A in diameter e.g. propane.

Lattice pore size: About 4A

**2.3  Crystalline calcium alumino-silicate**

Lattice pore size: About 5A

Molecules persorbed: The above and $n-C_4H_9OH$, $n-C_4H_{10}$, $C_3H_8$ to $C_{22}H_{46}$ and FREON (registered trademark) 12.

Molecules excluded: those over 5A in diameter e.g. iso compounds and all 4 carbon rings.

## 2.4 Crystalline sodium alumino-silicate

Lattice pore size:  About 10A

Chemical formula:    $Na_{86} [(AlO_2)_{86}(SiO_2)_{106}]. 276H_2O$

Molecules persorbed:  The above and those with an effective diameter less than 10A, including the halocarbons.

Molecules excluded:   those over 10A in diameter e.g. $(C_4F_9)_3N$.

When used to persorb $H_2O$, the above persorbers release heat in the region of 4180 joules per gram of $H_2O$. However, they all reach an equilibrium with the fluid persorbed such that one gram of the persorber will persorb generally about 0.2 gram of fluid. Higher pressure tends to increase the equilibrium persorption and _vice versa_. Higher temperature tends to decrease the equilibrium persorption and _vice versa_. At the typical equilibrium persorption of 22% of $H_2O$, the above persorbers therefore release about 0.22 x 4180 = 920 J per gram of persorber, which is approaching three times the figure of 333 J/gm obtained from the latent heat of fusion of water when used as a buffer substance. However this figure of 920 J/gm relates to the persorption of $H_2O$.

When used to persorb other fluids such as $CO_2$, the heat released is rather less. In the case of $CO_2$ the heat released is in the region of only 800 joules per gram of $CO_2$. Again the typical equilibrium persorption is about 20% so the heat released therefore is about 0.2 x 800 = 160 J/gm of persorber. This is about half of the 333 J/gm available from a water buffer and for that reason the present invention proposes that buffering is still the most suitable method of achieving boiling of the $CO_2$ or other working fluid in the power capsule.

However, for superheating the working fluid, persorbers (or the adsorptive types of material disclosed previously) may be preferred rather than buffer substances for several reasons as follows. First and foremost, persorbers (and to a lesser extent adsorbers) will provide heat at a temperature much higher than ambient temperature. Thus the persorber given in 2.3 above (and known as Type 5A) will persorb $CO_2$ to an equilibrium persorption of about 20% at temperatures as high as 150°C, at the pressures normally existing in a superheater supplied from a water-buffered power capsule, namely about 30 atmospheres. Adsorbers are not so good in this respect and such types as activated alumina, charcoal and silica gel tend to desorb much of the adsorbed $CO_2$ long before such superheat temperatures are reached.

Secondly, a large proportion of the heat supplied in superheating - as much as 70% with suitable design - is converted into useful motor shaft power output. This compares with only about 30% of the boiling heat input being converted into useful output.

Thirdly, the effect of superheating $CO_2$ to say 150°C at 30 atmospheres brings it to the "elbow" of the iso-enthalpy (energy) contour of about 840 J/gm on the $CO_2$ temperature-entropy chart, which is one of the most thermodynamically efficient points at which to start expansion in the motor because expansion from such a point provides a large enthalpy drop and therefore a large useful energy output from each gram of $CO_2$.

Fourthly, such superheating permits the subsequent expansion in the motor to be extended down to 2.0 or even 1.4 atmospheres (absolute), whereas prior to the present invention expansion was limited to about 5.2 atmospheres (absolute) because solid $CO_2$ could form below this pressure.

The effect of these four points, as applied to superheating of $CO_2$, is to permit the power-economy of a water-buffered power capsule to be increased from about 70 J/gm to about 140 J/gm i.e. a doubling of the energy obtainable from each gram of $CO_2$.

Furthermore, persorbers and adsorbers - and the other types of heat source material described below - may also be employed to superheat or reheat the working fluid during expansion in the working chamber(s) of the motor and the present invention specifically discloses this technique and proposes, in some embodiments, that heat source materials with high heats of adsorption or persorption or physico-chemical reaction should be placed in heat-conductive relationship with the said working chamber(s) so as to supply such heat during expansion of the working fluid. With suitable design this technique may be employed so as to increase the power-economy to 200 J/gm (i.e. about three times the present limitation) or even higher. Methods of achieving such levels according to the present invention are disclosed later in this specification.

3. Reversible chemical or physico-chemical types

The process of persorption is distinct from that of adsorption because in persorption the molecules of the persorbed working or other fluid actually enter the individual molecules of the persorber. It could be argued that this process is a chemical combination between the molecules of the two substances, especially as the persorbers given in 2. above exhibit a selective preference for polar or polarizable molecules which strongly suggests that persorption involves interaction of the polar valence bonds of persorber and persorbate. Such affinity between polar valence bonds is a characteristic of the chemical combination of polar substances.

Furthermore the process of persorption may be reversed by the application of heat and/or reduced pressure, so as to desorb the substance previously persorbed: this reversibility shows little or no hysteresis, and is also akin to reversible chemical reactions which also may be reversed by the application of heat and/or reduced pressure.

The present invention accordingly proposes the extension of the techniques hereinbefore described (by reference to heat source materials of the adsorbing and persorbing types), to the more general field of exothermic chemical or physico-chemical reactions which are again reversible by the application of heat and/or reduced pressure.

One heat source material which can be categorised under this heading is calcium oxide CaO which can be made to associate with $CO_2$ (or with $H_2O$ in another embodiment of the present invention) under pressure so as to release heat, and to dissociate therefrom by the application of heat and reduced pressure.

As in adsorbers and persorbers the amount of $CO_2$ (or $H_2O$) which associates in equilibrium is dependent on the temperature and pressure of the fluid in question. However in the case of calcium oxide the amount of heat released in this association - of $CO_2$ and calcium oxide to give calcium carbonate, or of $H_2O$ and calcium oxide to give calcium hydroxide $Ca(OH)_2$ - is very much greater than in the case of the best persorbers. For example at atmospheric pressure the association of $CO_2$ with CaO to give calcium carbonate is quoted as releasing about 2900 joules per gram of CaO - and at a temperature of $900^oC$. At higher pressures, for instance the approximately 30 atmospheres which may obtain in a superheater supplied by a water-buffered power capsule, the released heat would be slightly lower but would be available at considerably higher temperatures (than $900^oC$) if so desired. Generally one can expect to obtain at least 2400 J/gm of CaO when reacted with $CO_2$ - compared with the figure of about 160 J/gm of persorber quoted in 2. above, namely about 15 times as much.

Alternatively the CaO may associate with $H_2O$ to give $Ca(OH)_2$ in which case the heat released at atmospheric and higher pressure will be in the region of 1800 J/gm of CaO. Although less than the 2400 J/gm (at least) available from the $CO_2$ reaction, this 1800 J/gm is nevertheless adequate in most of the higher-power applications of the present invention. Generally the $H_2O$ reaction may be preferred firstly because it can be initiated at ambient temperature (especially under pressure) whereas the $CO_2$ reaction requires preheating before it will start, secondly because the $Ca(OH)_2$ can be dissociated (or "regenerated" to CaO) at lower temperatures and with less vacuum or at higher gauge pressures than $CaCO_3$ can, and thirdly because $H_2O$ is in many ways more convenient and less expensive that $CO_2$.

It is stressed that, whether $CO_2$ or $H_2O$ is used in the present invention, it can as desired be used either as the working fluid as well as the reversible reactant with CaO, or alternatively only as the reversible reactant so as to provide heat for the heating of another working fluid such as one of the halocarbons or the like. Also it is emphasized that, although both the $CO_2$ and the $H_2O$ reaction with CaO will provide heat at temperatures of at least $900^{\circ}C$ and $400^{\circ}C$ respectively, the present invention proposes that it is preferable to use this reaction heat to heat the working fluid to only $200^{\circ}C$ or so, in order that the motor may largely be made of existing or emergent plastics materials, with the exception perhaps of the walls of the working chamber(s) which may preferably be of metal if required to conduct heat from the reaction to the expanding gas within the working chamber(s). Such limitation of the working fluid temperature to $200^{\circ}C$ or so has the added advantage of provided a large mean temperature difference between the working fluid and the reaction, which encourages heat flow and so reduces the heat transfer area necessary.

The present invention is not limited to the use of CaO alone as a material which provides a reversible exothermic physico-chemical reaction with either $CO_2$ or $H_2O$ and the following alternatives may also be used:

3.1 Lithium Oxide $Li_2O$.

3.2 Sodium monoxide $Na_2O$.

3.3 Sodium peroxide $Na_2O_2$ - which gives an easily reversible reaction with water especially - though the product NaOH (sodium hydroxide or "Caustic Soda") is extremely corrosive.

3.4 Potassium monoxide $K_2O$.

3.5 Potassium dioxide $K_2O_2$.

3.7 Potassium peroxide $KO_2$.

3.8 Magnesium oxide MgO.

3.9 Calcium peroxide $CaO_2$.

3.10 Calcium tetroxide $CaO_4$.

3.11 Strontium Oxide SrO.

3.12 Strontium peroxide $SrO_2$.

3.13 Barium Oxide BaO, which is especially energetic with either $H_2O$ or $CO_2$ but, after reacting with $CO_2$ to give the carbonate $BaCO_3$, can be regenerated by heating with carbon - though this produces the toxic gas carbon monoxide CO.

3.14 Barium Peroxide $BaO_2$, which also has a particularly easily reversible reaction with oxygen, giving much heat.

The above list is not exhaustive and many other reversible reactions may be used, either where they react with a proportion of the working fluid, or where they react with another substance so as to provide heat for the working fluid. However the present invention is limited under this heading 3. to reactions which may be reversed by the application of heat and/or reduced pressure and, in some cases, by the addition of a fairly inexpensive substance to assist the regeneration process e.g. the addition of carbon in the regeneration of barium oxide as described in 3.13 above.

## BRIEF DESCRIPTION OF THE DRAWINGS

The invention will now be more particularly described, by way of example, with reference to the accompanying drawings illustrating preferred embodiments thereof, and in which:

Figure 1 is an elevation, partly in longitudinal cross-section, of an installed model aircraft power plant comprising a gas-operated motor and gas-supply apparatus in accordance with the invention; and

Figure 2 is a similar view of a more powerful model aircraft power plant in accordance with the invention, and including a superheater in which both the working fluid and another fluid are employed so as to supply heat to the working fluid during expansion in the working chambers of the motor.

## DESCRIPTION OF THE PREFERRED EMBODIMENTS

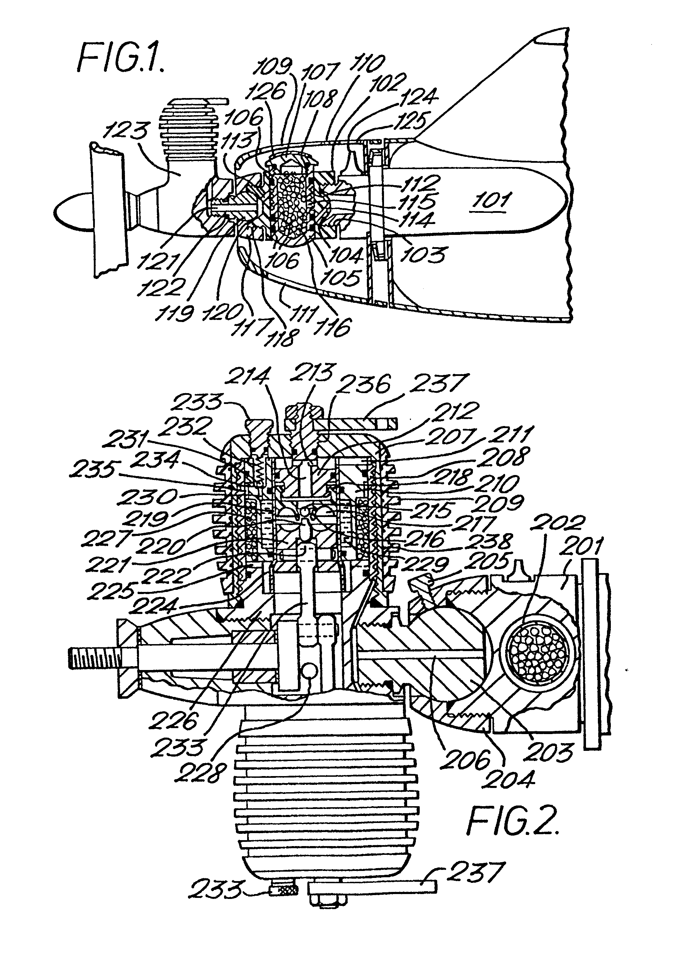

Referring to Figure 1, this shows a model aircraft motor 123 of approximately 8 watts rating, coupled to an "active superheater" module employing a persorber and the latter module coupled to a power capsule 101 adapted to be refilled from an external source of $CO_2$. The power capsule 101 depicted in Figure 1 is of the type disclosed in Figure 1 of my UK patent application No 29987/77 and contains approximately 0.5 gram of anti-bumping granules (in this case fused alumina) together with approximately 2 grams of mainly liquefied $CO_2$. The whole assembly of motor, active superheater and power capsule is approximately 16 cms long and is shown mounted in the nose of a model aircraft which may typically have a wingspan of 100 cms and a weight of 230 grams. The power capsule 101 will not be further described except insofar as to point out that it employs a water buffer so as to be effective in temperatures down to $0^{\circ}C$ without recourse to artificial reheating by e.g. warming in the hand after use.

The active superheater module comprises a body member 102 coupled to the power capsule 101 by mating screw threads 103 and sealed thereto by an O-ring 104. The body member 102 may advantageously be injection moulded from acetal, polypropylene or similar plastics material able to withstand a working temperature in its vertical (as viewed in Figure 1) bore of 80-100°C. For working temperatures much higher than this polycarbonate, polytrifluorochloro-ethylene, polyphenylene or polyimide plastics materials are to be preferred, together with O-rings of VITON (registered trademark) or silicone elastomer.

The body member 102 is provided with a transverse circular bore of approximately 2.0 cms diameter (shown with its centre line vertical in Figure 1) and closely fitting within this bore is a reactant chamber 105, sealed within the bore by three O-rings 106 and closed in an air-tight manner by a cap 107 and O-ring 108. The reactant chamber 105 is able to slide within the bore so as to take up a higher position as shown in Figure 1, which will be referred to as the "inactive" position, or a lower position approximately 0.3 cms lower than the inactive position which will be referred to as the "active" position. In the embodiment shown in Figure 1 movement of the reactant chamber from the inactive to the active position may be accomplished by downward finger pressure, access for this purpose being provided by an upper aperture 109 in the cowling 110, and movement from the active to the inactive position by upward finger pressure through a lower aperture 111.

The central section of the outer surface of the reactant chamber 105 is provided with a screw thread 112 so as to provide a relatively long helical passageway for the flow of $CO_2$ gas during active superheating. The area of passage cross-section in this screw thread 112 should be between 0.2 and 0.3 square millimetres in the Figure 1 embodiment which is designed to cater for

0008929

a $CO_2$ gas flow rate of approximately 5 to 10 grams per minute. When the reactant chamber is in either the active or inactive position the screw thread 112 communicates with an outlet hole 113. However an inlet hole 114, by which $CO_2$ gas is fed from the power capsule 101 to the active superheater, is provided as shown in Figure 1 so as to have its leftward end (as viewed in Figure 1) enclosed by two of the O-rings 106 when the reactant chamber 105 is in its upper (inactive) position, so that $CO_2$ may not flow to the screw thread 112. When the reactant chamber 105 is depressed to its active position, however, the inlet hole 114 is put into communication with the screw thread 112 so that $CO_2$ may flow. In addition a small feed hole 115 is provided in the wall of the reactant chamber 105 so that $CO_2$ gas may enter the interior of the reactant chamber 105 which may be charged with any of the heat source materials mentioned above but which in this embodiment preferably comprises approximately 4.5 grams of dehydrated calcium alumino-silicate (as described in 2.3 above) which has a lattice pore size of about 5A. This is a persorbing reactant of high heat of persorption of $CO_2$. Further holes such as the feed hole 115 may be provided if desired so as to allow more $CO_2$ to flow into and out of the interior of the reactant chamber 105 and thereby to provide a greater surface area for heat transfer, for instance as may be needed in larger versions of active superheaters.

The leftward end (as viewed in Figure 1) of the body member 102 is coupled to a coupling ring 117 by means of mating screw-threads 118 which, when tightened with the fingers, grips a ball-ended coupler 119 and seals it to the body member 102 by means of an O-ring 120. The coupler 119 is provided with a passage 121 and an O-ring 122 so as to make a gas-tight connection to the motor 123 and so as to lead superheated $CO_2$ gas thereto. The assembly comprising the coupling ring 117, the screw threads 118, the coupler 119, the O-ring 120 and the O-ring 122 is particularly useful as means to couple the active superheater module to the motor 123 and also to allow the thrustline of the motor 123 to be easily adjusted in azimuth and elevation whilst simultaneously allowing the motor 123 to be rotated about its thrustline and then fixed with its cylinder in any desired orientation.

In operation of the Figure 1 embodiment the reactant chamber 105 is first filled with a fresh charge of reactant 116, the cap 107 is screwed on and the reactant chamber is pushed into its upper (inactive) position. The power capsule 101 is then filled through its charging probe 124 (to which access is gained via an aperture 125 in the cowling 110) with a charge of approximately 2 grams of $CO_2$, most of which will be in liquid form within the power capsule.

The reactant chamber 105 is then depressed to its active position, which allows $CO_2$ gas to diffuse from the power capsule via the inlet hole 114 and the feed hole(s) 115 to meet the reactant 116, whereby it is persorbed with the evolution of heat which causes the reactant chamber 105 and its external screw thread 112 to heat up. Advantageously a reversible temperature-threshold-indicating device is affixed in heat-conductive relationship with the reactant chamber 105 and Figure 1 shows one such device in the form of a known type of self-adhesive temperature pad 126 affixed to the cap 107. This pad 126 may be chosen so as to change its colour or shade at for instance $80^{\circ}C$.

When the pad 126 shows that the temperature has reached $80^{\circ}C$ (for example) the motor is started whereupon $CO_2$ gas boiled off by the power capsule and entering the active superheater at a temperature close to $0^{\circ}C$ (by means of the water buffer in the power capsule) passes along the helical passageway formed by the screw thread 112 and is heated to approximately 60-70°C depending on the motor's power setting and therefore the flow rate of $CO_2$. In addition, in embodiments having a plurality of feed holes 115 $CO_2$ gas may pass through the interior of the reactant chamber and re-unite with the main gas flow so as firstly to increase the rate of persorption and secondly to carry heat so evolved into the $CO_2$ gas stream being supplied to the motor. In the case for example of the $CO_2$ being superheated to 65°C at 30 atmospheres pressure (which is typically the output pressure of a water-buffered power capsule) and then expanded to about 2 atmospheres in a motor of 8 or 9-to-one expansion ratio, the useful shaft output derived from the $CO_2$ may be in the region of 90 to 110 joules per gram of $CO_2$, compared with about 70 J/gm without the active superheater and about 40 J/gm with a plain (i.e. unbuffered) tank. Thus in this embodiment the power-economy is increased about 2.5 times above that of $CO_2$ motors currently on the market and which provide about 1.5 watts of output for 25 seconds on a 1 gram charge of $CO_2$.

By comparison, the embodiment in Figure 1 may provide, from a 2 gram charge of $CO_2$, 8 watts of output for 25 seconds - which is enough to fly a well-designed 100 cm span model aircraft to a height of 60 metres or so, and to traverse a full-size airfield in a flight lasting 3 or 4 minutes.

Following use the reactant 116 is tipped out of the reactant chamber 105 into a jar or other suitable receptacle. After for instance 40 flights (by which time some 180 grams of reactant will have been used and collected) the collected reactant may be regenerated to its original and active form merely by standing it in a domestic oven at 230°C for about an hour or so. It should then be stored in a well-sealed container prior to further use. This cycle of use and oven-regeneration may be continued substantially indefinitely.

Turning now to Figure 2, this shows a motor adapted to produce very much greater power than the Figure 1 embodiment, namely about 120 watts. Such a power output (allied to an output torque of about 6000 gram-cms) is enough to fly a radio-controlled model aircraft of up to 3 metres wingspan and weighing up to 7kg or more. Also it could be employed in a hedgetrimmer, a portable power tool, a small lawnmower or chainsaw, and in various other devices though the embodiment in Figure 2 is particularly adapted to employ features of the present invention which are attractive to model aircraft enthusiasts who to a large extent enjoy "fiddling" with their motors. Some suchlike features would be eliminated from motors used to drive hedgetrimmers, power tools and the like, in the interests of greater simplicity of use.

Figure 2 shows a twin-cylinder motor of 10 cc total swept volume, wherein a heat source material is employed to superheat the working fluid during expansion in the working chambers of the motor as well as prior to such expansion.

Only the forward part of a power capsule 201 is shown, the remainder being similar to the power capsule 101 in Figure 1 (or to other types as disclosed in UK patent application No 29987/77) but much enlarged therefrom so as to contain about 100 grams of $CO_2$. This quantity is chosen as being enough for about 5 minutes' powered flight of a large radio-controlled model aircraft but of course, in other embodiments applied for instance to power tools or hedgetrimmers etc, this duration of run may be increased or decreased as desired merely by appropriate choice of the size of the power capsule 201.

0008929

Again, an active superheater is employed to superheat the $CO_2$ to about $65^{\circ}C$, but in this case the reactant chamber 202 is mounted in a horizontal bore (as viewed in Figure 2) of the forward part of the power capsule 201 so as to reduce the overall length of the whole installation. Again a ball-ended coupler 203 and a coupling ring 204 are employed so as to permit thrustline adjustments but in this embodiment a clamping means is shown in the form of a clamp screw 205, used to lock the motor thrustline after adjustment. Other clamping means could be employed, for example a threaded ring making screw-threaded engagement with the outer diameter of the coupling ring 204 in the known manner of a lock-nut so as to squeeze and thereby lock the ball end of the coupler 203 to the ring.

After admission to the motor _via_ the passage 206 (of which there is at least one for each cylinder), the $CO_2$ passes along a helical passageway formed between the engaging and partially truncated screw threads of the cylinder head 207 and an inner member 208. The inner member is preferably made of high-conductivity material such as aluminium alloy. The cylinder head 207 may also be of such material in which case an outer finned sleeve 209 of low-conductivity material such as a plastics material able to withstand a temperature of $150^{\circ}C$ (e.g. polyphenylene or polyimide) is recommended so as to reduce the flow of heat to the surroundings. The fins of the finned sleeve 209 are desirable only for realism of appearance in model aircraft and would be dispensed with to advantage in other applications.

Issuing from the top (as viewed in Figure 2) of the inner member 208, the $CO_2$ traverses a middle member 210 by means of a radial passage 211 (or a plurality of them) so as to enter the space above a power-adjuster 212.

From here the gas flows through a crosshole 213 and a central hole 214 in the power-adjuster to a ball 215 in a frusto-conical valve seat 216 of a contra-piston 217. The latter is preferably moulded from one of the above-mentioned high-temperature plastics materials so as to have its underside (as viewed in Figure 2) hollowed as shown in the shape of half a toroid. It is pointed out that the contra-piston 217 has an upper skirt 218 shaped as shown to engage with a detented boss on the power adjuster 212 which has the effect of stretching the upper skirt 218 outwards against the bore of the cylinder liner 219 so as to afford a gas-tight seal thereto without the need for an 0-ring or other sealing device.

The ball 215 may be lifted by a valve actuator 220 which is borne slidably within a central hole in the piston 221 by a cam-shaped lobe 222 on the proximal or small-end of a connecting rod 223 (as more fully disclosed in my UK patent application No 31534/78) so as to lift the ball in a controlled and desired manner in the region of "top-dead-centre" (TDC) and thereafter. The top surface (as viewed in Figure 2) of the piston 221 is also provided with a moulded and hollowed shape as shown in the form of half a toroid, whereby $CO_2$ gas issuing from the ball valve 215/216 is encouraged to swirl in the manner of a smoke-ring whereby not only may heat be encouraged to flow from the wall of the cylinder liner 219 into the body of the $CO_2$ gas within it but also the kinetic energy of the $CO_2$ issuing from the valve may be converted into useful pressure energy as the piston moves away from TDC, rather than causing random and wasteful turbulence as is found in present-day $CO_2$ motors.

As the piston approaches "bottom-dead-centre" (BDC) its upper rim uncovers one or more small transfer holes 224 in the cylinder liner 219 which is swaged or belled out to a slightly larger bore in this region, which allows exhaustin $CO_2$ to diffuse via one or more radial slots 225 in the crankcase 226 so as to meet reactant 227 held in an outer annular cavity of the middle member 210. This reactant may again by any of the adsorbers, persorbers or reversible physico-chemical types disclosed above but advantageously is the same persorbe used in the reactant chamber 202, namely the dehydrated zeolite with a lattice pore size of 5A. The remainder of the expanded $CO_2$ gas escapes from the crankcase 226 via one or more exhaust ports 228, having first by-passed the piston 221 via the enlarged bore of the cylinder liner 219.

The $CO_2$ persorbed by the reactant 227 causes its temperature to rise to about $120^{\circ}C$ causing heat to flow radially inwards through the dividing wall of the middle member 210 (which should therefore be of a material of hig heat-conductivity such as metal) to its inner annular cavity which contains a buffer substance 229 which exhibits a change of state initially in the regi of $120^{\circ}C$ for example. In the embodiment of Figure 2 it is suggested that the buffer substance 229 may be a fairly concentrated solution of calcium chloride $CaCl_2$ in water such that it has a boiling point of about $120^{\circ}C$ at about 2 atmospheres absolute pressure.

The middle member's inner annular cavity communicates via a small vent hole 230 to a pressure-relief valve 231 which, under the action of a spring 232 and a temperature-adjuster screw 233, may be set to relieve at pressures from 1 to perhaps 3 atmospheres absolute, venting water vapour from the buff substance 229 via a side hole 234 and the annular gap 235 into the outer annu cavity containing the reactant 227, and concentrating the $CaCl_2$ solution 229

Thus, as $CO_2$ persorption heat causes the buffer substance 229 to be slowly dried, (thereby to increase its boiling point), water vapour is led to the persorber. This vapour causes the persorber to desorb its $CO_2$ whereupon the water vapour is persorbed, generating nearly six times as much heat as was produced by the $CO_2$ persorption. Thereby the buffer substance is heated towards say, $160^{\circ}C$, heating the cylinder liner 219 to about $155^{\circ}C$ and the $CO_2$ within the cylinder to about $150^{\circ}C$ at admission (i.e. at the ball valve 215). It should be added that the heat generated by the reactant in the outer annular cavity of the middle member 210 also flows radially outwards so as to heat the $CO_2$ (which enters at about $65^{\circ}C$), as it flows up the passageway formed by the truncated screw threads of the mating cylinder head 207 and inner member 208, to about $150^{\circ}C$.

By these means the useful energy derived from the $CO_2$ may be increased typically to 200 J/gm, so that 100 grams of $CO_2$ may provide about 20,000 joules of useful output. This compares with about 200 joules provided by the embodiment in Figure 1, namely about 100 times as much, for only 50 times as much $CO_2$.

Two other useful features of the Figure 2 embodiment are the following: firstly, and especially if the temperature adjuster screws 233 are slackened off so as to permit more ready boiling of the buffer substance's (229) water, water vapour surplus to that which can be persorbed mixes with the exhausting $CO_2$ so as to provide a vapour trail of condensed water droplets, providing a good facsimile of a smoke trail; secondly, by making the threads 236 of the power adjusters 212 in the two cylinders of opposing hands, the two control levers 237 may be moved in unison when making power adjustments, which greatly simplifies any motor-control linkage in a radio-controlled model.

0008929

Finally, the temperature adjuster screws 233 may be removed occasionally so as to allow water to be injected (for instance with a hypodermic needle) into the inner annular cavities of the middle members 210 so as to top up that -lost in boiling during operation, and the reactant 227 in the outer annular cavities of the middle members 210 may be regenerated in situ by heating the motor's cylinders after use by passing an electrical current through heating coils 238 for a few minutes whilst the temperature adjuster screws are tightened down to prevent boiling of the buffer substance 229. It is advantageous to mount a simple temperature cut-out (not shown in Figure 2) in the heating coil circuit so as to cut off the heating current when the temperature reaches about 250°C. Whilst such in situ regeneration may be a nuisance to some modellers, at least there is no need for haste to use the motor after regeneration (as there is if a preheated buffer is used instead) and in any event the motor may be used at rather lower economy without bothering to bring this cylinder-wall heating facility into use: the reactant chamber 202 may instead be charged with extra reactant so as to increase the active superheating temperature towards 120°C which will provide power-economy of about 140 J/gm, compared with the 200 J/gm which may be achieved with cylinder-wall heating.

The above-described Figure 2 embodiment is of course directed at model aircraft enthusiasts who ofter are prepared to spend time on doing what others feel is troublesome. Therefore, when applied for instance to hedgetrimmers, power tools etc, the cylinder-wall heating facility together with the middle member 210 and its reactant, and the inner member 208 and the temperature adjuster assembly, may be dispensed with so as to simplify and reduce the cost of the motor greatly. If instead the reactant chamber 202 is enlarged and developed so as to heat the $CO_2$ to 120°C or so, power-economies of about 140 J/gm may be achieved. This is adequate for lawntrimmers, horse clippers and the less high power versions of power tools and hedgetrimmers etc, and results in a very low-cost motor together with the very easy regeneration procedure described for the Figure 1 embodiment, requiring to be performed only once in perhaps 50 or 100 uses of the appliance. This may be compared with for instance having to recharge a battery-electric hedgetrimmer for may be eight hours after each use.

0008929

CLAIMS

1. A gas-operated motor having associated therewith a vessel containing or capable of being charged with gas or a gas/liquefied gas mixture under pressure; and a passage for the supply of gas from said vessel to the working chamber or chambers of the motor; characterised by at least one container in heat conductive relationship with, or capable of being brought into heat conductive relationship with, said passage or the working chamber(s) of the motor, said container containing or capable of being charged with a material which has the ability to adsorb or persorb or associate exothermically with a selected fluid and to desorb or dissociate from that fluid under the effect of heat and/or reduced pressure; and means for the supply of the selected fluid to said container.

2. Gas supply apparatus for association with a gas-operated motor and comprising a vessel containing or capable of being charged with gas or a gas/liquefied gas mixture under pressure; and a passage for the supply of gas from said vessel to the motor; characterised by at least one container in heat conductive relationship with, or capable of being brought into heat conductive relationship with, said passage, said container containing or capable of being charged with a material which has the ability to adsorb or persorb or associate exothermically with a selected fluid and to desorb or dissociate from that fluid under the effect of heat and/or reduced pressure; and means for the supply of the selected fluid to said container.

3. Apparatus according to claim 1 or claim 2 wherein, in use, the selected fluid which is supplied to said container is said gas.

4. Apparatus according to claim 3 wherein the container has an inlet communicable with said passage whereby a portion of the gas which flows through said passage can be supplied into said container.

5. Apparatus according to claim 4 wherein the container has an outlet communicable with said passage whereby gas supplied into said container can be returned to said passage after flowing through the container.

6. Apparatus according to any preceding claim wherein said container is generally cylindrical and is provided externally with a screw thread which defines a helically extending portion of said passage in heat conductive relationship with the container.

7. A motor according to claims 1 and 3 comprising a said container in heat conductive relationship with a working chamber thereof; and means for supplying gas exhausted from said working chamber into said container.

8. Apparatus according to any preceding claim including a source of a said selected fluid which is different from said gas.

9. Apparatus according to any preceding claim wherein said container is charged with a material chosen from the group comprising alumina, porous pot, chalk, charcoal and silica gel.

10. Apparatus according to any one of claims 1 to 8 wherein said container is charged with a material chosen from the group comprising crystalline alumino -silicates of potassium, sodium and calcium.

11. Apparatus according to any one of claims 1 to 8 wherein said container is charged with a material chosen from the group comprising oxides of lithium, sodium, potassium, magnesium, calcium, strontium and barium.

12. Apparatus according to any preceding claim comprising a further container holding or capable of being charged with a buffer substance (as hereinbefore defined) in heat conductive relationship with said vessel.

13. Apparatus according to claim 12 wherein said further container is charg
with a buffer substance which undergoes a change of state at a temperature
within the range $-10^\circ C$ to $+10^\circ C$.

14. Apparatus according to claim 13 wherein said buffer substance is water.

15. Apparatus according to any preceding claim comprising a further contain
holding or capable of being charged with a buffer substance (as hereinbefore
defined) in heat conductive relationship with said passage.

16. A motor according to claim 1 or any claim appended thereto comprising a
further container holding or capable of being charged with a buffer substanc
(as hereinbefore defined) in heat conductive relationship with the working
chamber(s) thereof.

17. A motor according to claim 1 or any claim appended thereto comprising a
said container in heat conductive relationship with a working chamber therec
a further container holding or capable of being charged with a buffer substa
(as hereinbefore defined) in heat conductive relationship with such working
chamber; and means for supplying to said container vapour derived, in use, f
said further container, to constitute a said selected fluid.

18. Apparatus according to any preceding claim wherein said vessel holds a
charge of carbon dioxide, water vapour or a FREON.

0008929

1/1

FIG.1.

101

FIG.2.

0008929

Application number

EP 79 301 780.7

European Patent Office

**EUROPEAN SEARCH REPORT**

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A1 - 2 338 377 (RILETT) <br> * pages 1 to 11 * | 1-8,12, 16,17 | F 01 K 25/10 |
| | -- | | |
| | DE - C - 143 916 (FERROL) <br> * claim * | 1-3 | |
| | -- | | |
| A | DE - C - 312 879 (WILHELMI) <br> * claim * | | |
| | -- | | **TECHNICAL FIELDS SEARCHED (Int.Cl.³)** |
| A | DE - C - 106 302 (NÜRNBERG) <br> * claim * | | |
| | -- | | |
| A | CH - A - 45 833 (HORST) <br> * page 1 * | | A 63 H 25/00 <br> A 63 H 29/00 <br> F 01 K 25/00 |
| | -- | | |
| A | FR - A - 608 673 (VEYSSIERE) <br> * page 1 * | | |
| | ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |
| Place of search <br> Berlin | Date of completion of the search <br> 29-11-1979 | Examiner <br> STÖCKLE |

EPO Form 1503.1  06.78